# EUROPÄISCHE PATENTANMELDUNG

(11) **EP 1 253 413 A1**
(43) Veröffentlichungstag der Anmeldung: **30.10.2002**
(21) Anmeldenummer: 02009085.8
(22) Anmeldetag: 24.04.2002
(51) Int. Cl.: G01L 25/00

(54) **Vorrichtung und Verfahren zum Kalibrieren von Dehnungsmessschaltungen**

(30) Priorität: 28.04.2001 DE 10120982
(71) Anmelder: Hottinger Baldwin Messtechnik GmbH, 64293 Darmstadt (DE)
(72) Erfinder: Kreuzer, Manfred, 64331 Weiterstadt (DE)
(74) Vertreter: Behrens, Helmut, Dipl.-Ing.

(57) **Zusammenfassung**

Die Erfindung betrifft eine Vorrichtung und ein Verfahren zum Kalibrieren von Dehnungsmeßschaltungen, die aus mindestens einem Dehnungsaufnehmer (SG) in Viertelbrückenschaltung besteht, der über eine mindestens dreiadrige Meßleitung (16) mit einem Meßkanal (15) verbunden ist. Im Meßkanal (15) ist zur Erfassung und Verstärkung der Dehnungsmeßsignale eine Brücken- und Verstärkerschaltung (V) vorgesehen. Weiterhin ist zur Berücksichtigung der Spannungsabfälle auf den Meßleitungen (16) im Meßkanal (15) noch eine Regelschaltung (17, 20) vorgesehen. Zur Kalibrierung dieser Dehnungsmeßschaltung ist im Meßkanal (15) eine Kalibrierschaltung (26) integriert, die mindestens aus einem zuschaltbaren Kalibrierwiderstand (R_{S}) besteht, der parallel zum Ergänzungsbrückenwiderstand (R_{E}) schaltbar ist. Durch die Zuschaltung dieses Kalibrierwiderstandes (R_{S}) wird ein Kalibriersignal erzeugt, das als Meßsignal einer definierten Dehnungsänderung erfaßbar und mit einem vorgegebenen Referenzwert vergleichbar ist. Dabei sind für die Abweichung noch Grenzwerte vorgebbar, deren Überschreitung gesondert signalisiert oder angezeigt wird. Mit einer derartigen Kalibrierschaltung (26) können bei einer Vielstellenmessung alle vorhandenen Meßkanäle (15) in kürzester Zeit vollautomatisch mit hoher Genauigkeit kalibriert werden.

## Beschreibung

Die Erfindung betrifft eine Vorrichtung zum Kalibrieren von Dehnungsmeßschaltungen gemäß dem Oberbegriff des Patentanspruchs 1 sowie ein Verfahren zur Durchführung der Kalibrierung gemäß dem Oberbegriff des Patentanspruchs 8.

In der Flugzeugindustrie werden heute vielfach Materialspannungen an größeren Tragflächen- oder Rumpfteilen im Windkanal oder in anderen Versuchsaufbauten mit Dehnungsmeßschaltungen erfaßt. Dazu werden vorzugsweise Dehnungsmeßstreifen an der Oberfläche der zu testenden Flugzeugteile appliziert, über Meß- und Speiseleitungen mit den nachgeschalteten Meßverstärkern verbunden und mittels programmgesteuerter digitaler Rechenanlagen ausgewertet. Um einen möglichst umfassenden Spannungszustand der Flugzeugteile oder anderer spannungsbelasteter Teile erfassen zu können, werden an dessen Oberflächen teilweise bis zu 4.000 Dehnungsmeßstreifen befestigt. Zur Auswertung jeder Messung muß vor der Versuchsdurchführung und bei jeder Änderung des Meßaufbaus oder der Umgebungsbedingungen jede Dehnungsmeßschaltung nachvollziehbar kalibriert werden. Wollte man dies manuell wie bei einer einzelnen Meßstelle mit Referenzwiderständen durchführen, würde dies jeweils einige Minuten in Anspruch nehmen. Bei hohen Meßstellenzahlen wäre dies sehr aufwendig und würde kostbare Versuchszeit in Anspruch nehmen.

Beim Einsatz derartiger Dehnungsmeßstreifen zur Dehnungsmessung werden diese zur Meßwerterfassung meist mit Kompensationsdehnungsmeßstreifen oder Ergänzungswiderständen zu einer Wheatstone'schen Brücke verschaltet. Dabei werden bei Vielstellenmeßschaltungen die Ergänzungswiderstände meist bereits im Eingangsbereich der Verstärkerkanäle fest montiert, so daß die Dehnungsmeßstreifen als sogenannte Viertelbrücke schaltbar sind und über Meßleitungen mit den einzelnen Verstärkereingängen verbunden werden. Um bei längeren Meßleitungen den meßwertverfälschenden Spannungsabfall auf den Meß- und Speiseleitungen berücksichtigen zu können, sind verschiedene spannungsgeregelte Dreileiterschaltungen bekannt, durch die dieser Spannungsabfall berücksichtigt wird.

Jede Dehnungsmeßstelle ist deshalb bei derartigen Dehnungsmeßschaltungen mit mindestens einer dreiadrigen Meß- und Speiseleitung auf jeweils einem Verstärkerkanal geführt und gruppenweise über Stecker an vielkanälige Verstärkerbaugruppen mit beispielsweise bis zu 128 Meßkanälen angeschlossen. Es sind deshalb Kalibriergeräte bekannt, die über Meßgerätestecker an die jeweiligen Verstärkerbaugruppen anschließbar sind und mit denen die bis zu 8 Meßschaltungen einer Verstärkerbaugruppe mit einem nachvollziehbaren Kalibriervorgang gleichzeitig kalibriert werden können. Dazu sind in den Kalibriergeräten Schaltungen vorgesehen, die mindestens aus einem Referenzwiderstand und einem anschaltbaren Parallelwiderstand bestehen, wobei der Referenzwiderstand dem Nennwert eines Dehnungsmeßstreifens entspricht. Die zuschaltbaren Parallelwiderstände sind dabei so bemessen, daß sie im zugeschalteten Bereich mit dem Referenzwiderstand eine definierte Dehnung eines Dehnungsmeßstreifens nachbilden. Da diese Kalibriergeräte jeweils manuell an eine Verstärkerbaugruppe durch Abziehen der Meßleitungen und Aufstecken des Verbindungskabels des Kalibriergerätes aufgeschaltet werden müssen, ist ein derartiger Aufwand bei einigen tausend Meßstellen nicht unbeträchtlich, so daß die Kalibrierung einen erheblichen Zeitaufwand erfordert. Im übrigen können sich bei der Wiederanschaltung der Meßstellen zusätzliche Übergangswiderstände durch die Steckverbindung bilden, die das Kalibrierergebnis verfälschen.

Der Erfindung liegt deshalb die Aufgabe zugrunde, die Kalibrierung von Dehnungsmeßschaltungen ohne großen manuellen Aufwand und in möglichst kurzer Kalibrierzeit durchführen zu können.

Diese Aufgabe wird durch die in Patentanspruch 1 und 8 angegebene Erfindung gelöst. Weiterbildungen und vorteilhafte Ausführungsbeispiele sind in den Unteransprüchen angegeben.

Dabei hat sich überraschenderweise gezeigt, daß sich bei speisespannungsgeregelten Drei- und Mehrleiterschaltungen eine Kalibrierung auch mit einem zuschaltbaren Parallelwiderstand am verstärkerseitigen Ergänzungswiderstand ausführen läßt, da sich die Brücke insgesamt im vorgesehenen Dehnungsbereich relativ linear verhält, so daß es meßtechnisch gleichwertig ist, ob die Kalibrierschaltung im Dehnungsmeßstreifenbereich oder am Ergänzungswiderstand vorgesehen wird.

Es war bei Dehnungsmeßschaltungen zwar schon bekannt, auch am Ergänzungswiderstand einen zuschaltbaren Parallelwiderstand anzuordnen, wobei dieser aber nicht zur Kalibrierung, sondern nur zur Kontrolle des Anschaltzustandes des Dehnungsmeßstreifens verwendet wurde. So konnte damit lediglich kontrolliert werden, ob der Eingangskreis ordnungsgemäß angeschlossen worden ist und keine Leitungsunterbrechungen oder Kurzschlüsse vorhanden waren, indem nur eine undefinierte Meßsignaländerung auftreten mußte. Die Fachwelt hielt dabei eine Kalibrierung mit Meßfehlern von höchstens 0,2 % mittels eines zuschaltbaren Parallelwiderstandes im Ergänzungswiderstandsbereich für nicht durchführbar, da der Widerstand des messenden Dehnungsmeßstreifens in Folge von Toleranzen und Dehnungen um mehrere Prozent vom Nennwert abweichen kann und daß die zum Dehnungsmeßstreifen führenden Anschlußleitungen bei längeren Kabeln ebenfalls Widerstände im Bereich von mehreren Ohm haben können. Erst durch die Erkenntnis, daß eine gegenläufige Beeinflussung zwischen dem Dehnungsmeßstreifenviertelzweig und dem Ergänzungswiderstandsbrückenzweig ein relativ lineares Brükkenverhalten ergibt, war mit einer definierten Widerstandsänderung im Ergänzungswiderstandsbereich eine Kalibrierung mit engen Toleranzen durchführbar.

Die Erfindung hat den Vorteil, daß durch die feste Anordnung der Kalibrierschaltung in jedem Meßkanal die Kalibrierung vollautomatisierbar durchgeführt werden kann. Dies ist durch programmgesteuerte Rechenanlagen vorteilhaft auch in regelmäßigen Abständen oder in arbeitsfreien Zeiträumen vollautomatisch möglich und kann in kürzester Zeit durchgeführt werden. Dabei können durch gleichzeitige Anschaltung aller Kalibrierwiderstände alle vorhandenen Meßkanäle gleichzeitig kalibriert werden, auch wenn sie in mehreren Verstärkerbaugruppen angeordnet sind. Auf einfache Weise kann dabei auch der gesamte Kalibriervorgang listenmäßig protokolliert werden, so daß vorteilhafterweise nachprüfbare Kalibrierergebnisse erstellbar sind. Durch einfachen Vergleich des erfaßten Kalibriersignals mit einem vorgegebenen Referenzsignal kann für alle Meßkanäle gleichzeitig oder nacheinander die jeweilige Abweichung festgestellt und bei Überschreitung eines vorgegebenen Grenzwertes eine Fehlermeldung signalisiert werden.

Die Erfindung hat weiterhin den Vorteil, daß die Meßkreise beim Kalibrieren nicht abgetrennt werden müssen, sondern vielmehr die am Meßkanal angeschlossene Meßstelle und dessen Anschlußleitungen in dem Kalibriervorgang eingeschlossen sind, was die Meßsicherheit und Meßgenauigkeit verbessert. Dabei ist eine Kalibrierung auch dann noch mit hoher Präzision möglich (Fehler < 0,1%), wenn die Meßstellenwiderstände bis zu +/- 6 % von ihrem jeweiligen Nennwert abweichen und zusätzlich noch Leitungswiderstände von über 20 % des Meßstellennennwertes vorhanden sind. Durch die verbleibende unbeeinflußte Anschaltung der Meßstellen wird gleichzeitig eine Überprüfung der ordnungsgemäßen Anschaltung der Meßstellen durchgeführt, so daß ein derartiger Prüfvorgang entbehrlich ist.

Besonders vorteilhaft ist die einfache Ausgestaltung der Kalibriervorrichtung, da im Grunde nur ein vorgegebener anschaltbarer Meßwiderstand im Meßkanal vorgesehen werden muß. Gleichzeitig kann der vorhandene präzise Ergänzungswiderstand zur Kalibrierung mitbenutzt werden, so daß eine sehr kostengünstige Kalibriervorrichtung geschaffen wurde, die insbesondere bei einer Vielstellendehnungsmessung vorteilhaft ausführbar ist. Die erfindungsgemäße Kalibrierschaltung ist auch auf einfache Weise in vorhandene Meßkanäle integrierbar, ohne daß diese Meßschaltungen nennenswert verändert werden müßten und auch kaum ein zusätzlicher Platzbedarf dafür erforderlich ist.

Die Erfindung wird anhand eines Ausführungsbeispiels, das in der Zeichnung dargestellt ist, näher erläutert. Es zeigen:
- Fig. 1:: ein vereinfachtes Schaltbild einer Meßkanalkalibrierung nach dem Stand der Technik, und
- Fig. 2:: ein vereinfachtes Schaltbild einer Vorrichtung zur Dehnungsmessung mit einer integrierten Kalibrierschaltung.

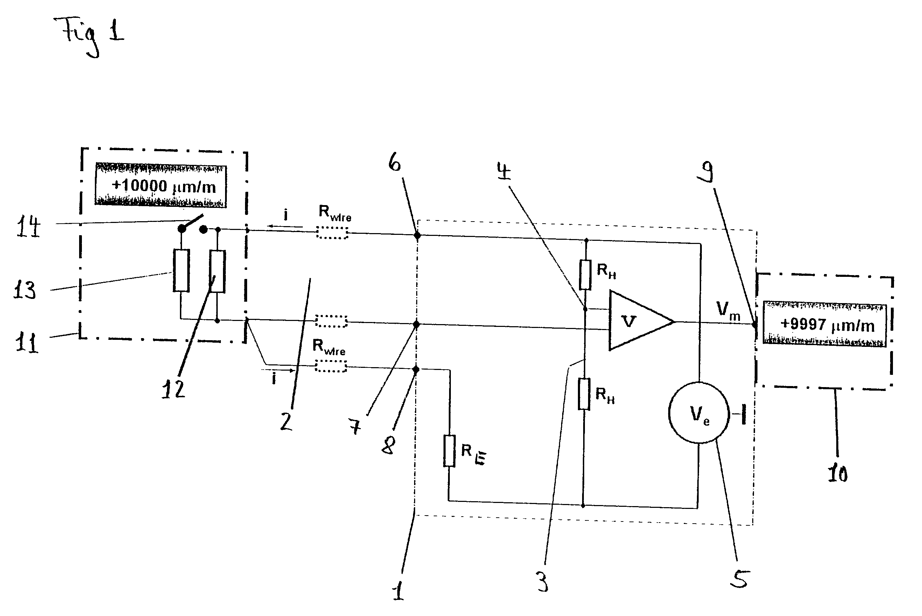

Die Fig. 1 der Zeichnung zeigt ein vereinfachtes Schaltbild zur Kalibrierung eines Meßkanals 1 mit einem extern über einen Stecker oder dergleichen anschließbares Kalibriergerät für maximal 8 Meßkanäle einer Verstärkerbaugruppe nach dem Stand der Technik. Jeder Meßkanal 1 innerhalb einer Verstärkerbaugruppe besteht im wesentlichen aus den Ergänzungswiderständen R_{E}, R_{H} einer Wheatstone' schen Vollbrücke, einer Speisespannungsschaltung 5 und einer Meßverstärkerschaltung V.

Bei der vorgesehenen Dehnungsmeßschaltung wird ein eingesetzter Dehnungsmeßstreifen als sogenannte Viertelbrücke mit mindestens drei weiteren Ergänzungs- R_{E} und Hilfswiderständen R_{H} zu einer Wheatstone^{/}sehen Vollbrücke verschaltet. Diese Widerstände R_{E}, R_{H} sind im Meßkanal 1 einer Verstärkerbaugruppe angeordnet und über mindestens eine drei- oder mehradrige Meßleitung 2 mit einem nicht dargestellten Dehnungsmeßstreifen als Dehnungsaufnehmer verbunden. Dabei sind zwei identische Hilfswiderstände R_{H} zu einer Halbbrücke 3 verschaltet und mit ihrem Mittenanschluß 4 mit dem Eingang eines Operationsverstärkers V als Verstärkerschaltung verbunden.

Ein Ergänzungswiderstand R_{E} ist zu einem der beiden Brückenhilfswiderstände R_{H} parallel geschaltet und gleichzeitig mit der Speisespannungsquelle 5 verbunden. Die Speisespannungsquelle 5 ist mit dem anderen Spannungspol mit dem zweiten Brückenhilfswiderstand R_{H} verschaltet und auf einem Meßkanalanschluß 6 gelegt. Ein zweiter Meßkanalanschluß 7 ist mit dem zweiten Verstärkereingang und ein dritter Meßkanalanschluß 8 mit dem Ergänzungswiderstand R_{E} verbunden. Der Ausgang des Meßverstärkers V ist mit einem Meßkanalausgangsanschluß 9 verbunden, dessen Ausgangssignal in einer nachfolgenden Anzeigeschaltung 10 anzeigbar ist oder zur Weiterverarbeitung in einer programmgesteuerten Rechenanlage verwendet werden kann.

Eingangsseitig ist der Meßkanal 1 mit einer dreiadrigen Meßleitung 2 mit einer Kalibrierschaltung 11 eines Kalibriergerätes verbunden, das anstatt des Dehnungsmeßstreifens an den Meßkanal 1 geschaltet ist. Im Kalibriergerät ist für jeden Meßkanal 1 eine separate Kalibrierschaltung 11 vorgesehen, die aus mindestens zwei Meßwiderständen besteht, die eine anschaltbare Parallelschaltung darstellen. Der fest angeschaltete Referenzwiderstand 12 entspricht dem Nennwiderstand des vorgesehenen Dehnungsmeßstreifens. Derartige Dehnungsmeßstreifen werden vorzugsweise mit Nennwiderstandswerten von 120, 350 oder 1.000 Ω gefertigt. Parallel zu diesem Referenzwiderstand 12 ist noch ein Kalibrierwiderstand 13 über einen elektrischen Schalter 14 anschaltbar, der eine vorgegebene Dehnungsänderung eines Dehnungsmeßstreifens von 10.000 µm/m nachbildet.

Ist ein derartiges Kalibriergerät anstatt der einzelnen Dehnungsmeßstreifen über eine Steckverbindung an die Verstärkerbaugruppe angeschlossen, so müssen alle Meßkanäle 1 zunächst ein Nullsignal anzeigen, da durch den angeschlossenen Referenzwiderstand 12 die Brücke abgeglichen sein müßte, wenn der Meßkanal 1 ordnungsgemäß arbeitet. Wird nun durch den Schalter 14 der Kalibrierwiderstand 13 zugeschaltet, so wird eine Dehnungsänderung von 10.000 µm/m nachgebildet. Dadurch wird die Brücke so verstimmt, daß in der Verstärkerschaltung V im Diagonalzweig 4, 7 ein Meßsignal erfaßt wird, durch das beispielsweise eine Dehnungsänderung von -9.997 µm/m in der Anzeigeschaltung 10 angezeigt wird. Eine derartig geringe Abweichung von 3 µm/m bei einer nachgebildeten Dehnungsänderung von 10.000 µm/m beträgt 0,03% und liegt in jedem Fall im zulässigen Toleranzbereich, so daß die dargestellte Kalibrierschaltung 11 einen ordnungsgemäß kalibrierten Meßkanal 1 anzeigt.

Die Kalibrierprozeduren sind vorzugsweise so ausgebildet, daß sie die einzelnen Meßkanäle 1 identifizieren und die zugehörigen Kalibrierdaten speichern und bei solchen Meßkanälen Fehlermeldungen anzeigen oder ausdrucken, die über den zulässigen Toleranzwerten liegen. Eine derartige Kalibrierung erfolgt jeweils für jede Verstärkerbaugruppe mittels eines Gerätestekkers, mit dem zunächst die Dehnungsmeßstreifen abgeschaltet und das Kalibriergerät durch Aufstecken der Steckvorrichtung angeschaltet wird. Nach Beendigung der Kalibrierung wird das Kalibriergerät entfernt und die Meß- und Speiseleitungen 2 der Dehnungsmeßstreifen wieder mit den Meßkanälen 1 der Verstärkerbaugruppe verbunden. Dieses Verfahren muß für jede ansteckbare Verstärkerbaugruppe separat erfolgen und erfordert bei vielen Verstärkerbaugruppen einen erheblichen manuellen Arbeits- und großen Zeitaufwand, bis eine vollständige Kalibrierung aller Meßkanäle 1 erfolgt ist.

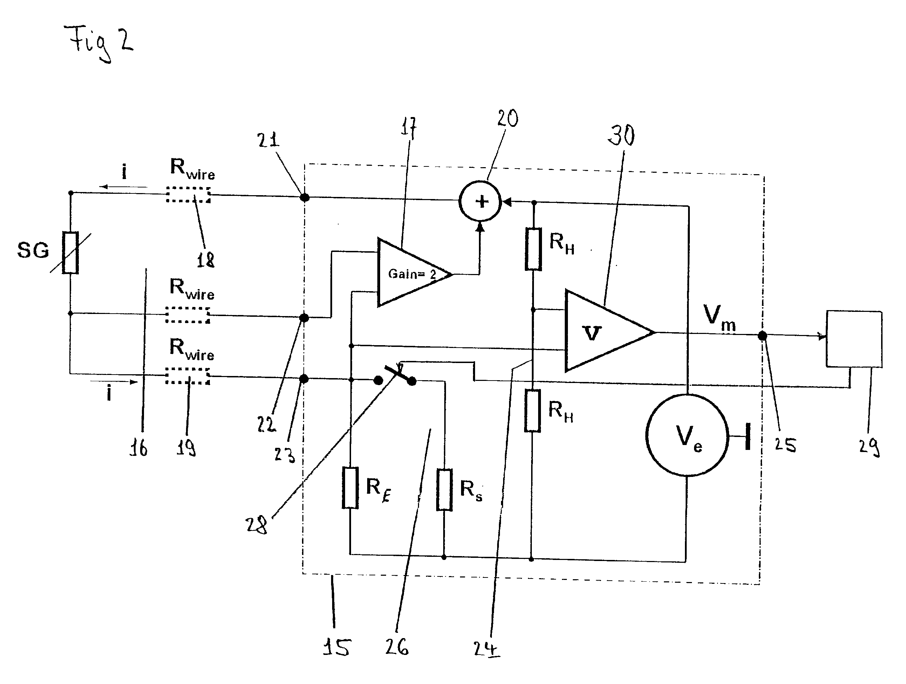

Die Fig. 2 der Zeichnung zeigt ein vereinfachtes Schaltbild einer Vorrichtung zur Dehnungsmessung eines Meßkanals 15 mit einer integrierten Kalibrierschaltung 26 im Bereich des Ergänzungswiderstandes R_{E}. Bei dieser Dehnungsmeßschaltung ist ein Dehnungsmeßstreifen SG zur Dehnungsmessung außerhalb des Meßkanals 15 vorgesehen. Dieser Dehnungsmeßstreifen SG ist beispielsweise mit einer Vielzahl anderer Dehnungsmeßstreifen SG an einem dehnungsempfindlichen Flugzeugbauteil appliziert und über beispielsweise eine spannungsgeregelte dreiadrige Meßleitung 16 mit dem Meßkanal 15 verbunden. Diese Meßleitung 16 ist durch dessen Leitungswiderstände R_{wire} nachgebildet und kann auch viele hundert Meter von der Meßkanalschaltung 15 entfernt sein. Die Meßleitung 16 ist beispielsweise über Anschlußstekker mit dem Meßkanal 15 verbunden und braucht auch während einer Kalibrierung nicht vom Meßkanal 15 entfernt werden.

Die Spannungsnachregelung wird durch einen Operationsverstärker 17 mit einem konstanten Verstärkungsfaktor von 2 erzeugt, der den Spannungsabfall auf den beiden Speiseleitungen 18, 19 über eine Addierschaltung 20 nachregelt. Eine derartige Addierschaltung 20 wird vorzugsweise als Summierverstärker ausgebildet. Eine derartige Spannungsnachregelung ist aus der noch nicht veröffentlichten DE 199 57 088.4 vom 29.11.1999 bekannt und kompensiert die Spannungsabfälle auf den Meß- und Speisespannungsleitungen 18, 19, die durch die Leitungswiderstände R_{wire} verursacht werden.

Ein Dehnungsmeßstreifen als Dehnungsaufnehmer kann auch durch eine geregelte Vierleiterschaltung mit einem Meßkanal verbunden werden. Derartige spannungsgeregelte Vierleiterschaltungen für Dehnungsmeßstreifen sind aus dem Rohrbach, Handbuch für experimentelle Spannungsanalyse, Düsseldorf 1989, Seite 676 vorbekannt.

Der Dehnungsmeßstreifen SG ist als sogenannte Viertelbrücke geschaltet und über einen ersten Speisespannungsanschluß 21, einem Fühlerleitungsanschluß 22 und einem zweiten Speisespannungsanschluß 23 mit dem Meßkanal 15 verbunden. An den zweiten Speisespannungsanschluß 23 ist mit dem Dehnungsmeßstreifen SG im Meßkanal 15 ein Ergänzungswiderstand R_{E} in Reihe geschaltet, der mit den Dehnungsmeßstreifen SG eine Halbbrücke bildet. Parallel zu dieser Halbbrücke ist noch eine weitere Halbbrücke 24 aus zwei in Reihe geschalteten Hilfswiderständen R_{H} vorgesehen, wobei beide Halbbrücken eine Wheatstone'sche Vollbrücke bilden.

In der Meßdiagonalen dieser Vollbrücke ist ein Meßverstärker 30 geschaltet, an dessen Ausgang 25 ein Dehnungsmeßsignal anliegt, das als elektrisches Meßsignal in mV/V erzeugt wird. Die Brückenschaltung wird von einer Spannungsquelle Vₑ im Meßkanal 15 versorgt, die einerseits mit der Hilfshalbbrücke 24 und der Addierschaltung 20 und andererseits mit dem Ergänzungswiderstand R_{E} und einer Kalibrierschaltung 26 verbunden ist. Dabei besteht die Kalibrierschaltung 26 aus einem Kalibrierwiderstand R_{S}, der über einen elektronischen Schalter 28 parallel zum Ergänzungswiderstand R_{E} schaltbar ist. Der Kalibrierwiderstand R_{S} ist als hochpräziser Meßwiderstand ausgebildet. Bei einem herkömmlichen Dehnungsmeßstreifen von 350 Ω Nennwiderstand ist der Ergänzungswiderstand R_{E} ebenfalls mit einem Widerstandswert von 350 Ω vorgesehen. Bei einer derartigen Schaltung besitzt der Kalibrierwiderstand R_{S} beispielsweise einen Wert von 87,25 kΩ, wobei durch die Parallelschaltung ein Kalibriersignal erzeugt wird, das eine Dehnungsänderung an einem Dehnungsmeßstreifen SG von 2.000 µm/m (k-Faktor k=2) nachbildet.

Solange der Kalibrierschalter 28 geöffnet ist, liegt am Ausgang 25 der Brücke ein Ausgangssignal an, das der relativen Dehnung am Dehnungsmeßstreifen SG entspricht. Im unbelasteten Zustand der Meßschaltung müßte der Dehnungsmeßstreifen SG als auch der Ergänzungswiderstand R_{E} idealerweise jeweils einen Wert von 350 Ω aufweisen und die Brücke wäre abgeglichen und am Ausgang müßte ein Nullsignal anliegen. Aber auch wenn der Dehnungsmeßstreifen SG eine Widerstandstoleranz besitzt oder bereits gedehnt oder gestaucht wäre und somit stark (z. B. um mehrere Prozent) von seinem Nennwert abweichen würde, kann bei der Applikation das Ausgangssignal rechnerisch durch eine nicht dargestellte Nullabgleichschaltung auf Null abgeglichen werden. Ein derartiger rechnerischer Nullabgleich hat dabei auch keinen Einfluß auf die Meßempfindlichkeit, da sich die relative Widerstandsänderung des Dehnungsmeßstreifens linear zur Dehnung verhält, die die Empfindlichkeit von Brückenschaltungen in weiten Grenzen praktisch unbeeinflußt läßt und es deshalb auf den Ausgangswert des Dehnungsmeßstreifens SG nicht ankommt.

Nach diesem automatisch durchführbaren Nullabgleich erfolgt die Kalibrierung unter Simulation einer vorgegebenen Dehnungsänderung mit beispielsweise 2.000 µm/m durch Anschaltung des Kalibrierwiderstandes R_{S} über den elektronischen Schalter 28 parallel zum Ergänzungswiderstand R_{E}. Hierdurch wird ein Kalibriersignal im Ergänzungszweig bzw. der Ergänzungsviertelbrükke erzeugt, das bei ordnungsgemäßer Meßschaltung zu einem Ausgangssignal von recht genau 2.000 µm/m führt. Dies überraschende Ergebnis resultiert daraus, daß die Wechselwirkungen zwischen den Dehnungsmeßstreifen SG und dem Ergänzungswiderstandsbereich bei Dehnungsmessungen zu einem weitgehend linearisierten Bereich der Brücke führen. So hat sich in der Praxis gezeigt, daß in einem verhältnismäßig großen Dehnungsbereich eines Dehnungsmeßstreifens von beispielsweise -40.000 µm/m bis +40.000 µm/m (entspricht +/- 8% Toleranz des Dehnungsmeßstreifens) die Empfindlichkeit (mV/V) der Brückenschaltung nur +/- 0,1% vom Idealwert abweicht. Eine derartig geringe Abweichung ist aber bei Dehnungsmessungen vernachlässigbar klein. Diese Konstanz der Empfindlichkeit gilt sowohl für die gemessene Dehnung mittels Dehnungsmeßstreifen als auch für das Kalibriersignal, obwohl der Dehnungsmeßstreifen um +/-8% von seinem Nennwert abweichen kann. Dieser überraschende Eigenschaft der Brückenschaltung ist es zu verdanken, daß das Kalibriersignal eine hohe Präzision besitzt und zur Kalibrierung verwendet werden kann.

Eine Kalibrierung von Dehnungsmeßschaltungen kann aber auch erfolgen, wenn kein vorheriger Nullabgleich erfolgt ist. Dann müßte bei Anschaltung des Kalibrierwiderstands eine Meßsignaländerung von beispielsweise 2.000 µm/m gegenüber dem vorherigen Meßwert eintreten.

Da der Ergänzungswiderstand R_{E} und der Kalibrierwiderstand R_{S} vorteilhafterweise im Meßkanal 15 fest einbaubar sind, ist mit dieser Kalibrierschaltung 26 eine weitgehend selbsttätige Kalibrierung der Brücke auch bei Vielstellenmessungen möglich, ohne daß zeitraubende manuelle Ausführungen notwendig sind. So können durch die selbsttätige Zuschaltung der Kalibrierschalterr 28 in allen Meßkanälen 15 präzise Dehnungsänderungssignale simuliert werden. Dabei können die Ausgangssignale über eine programmgesteuerte Rechenschaltung 29 auf beispielsweise +/- 0,2% Grenzwertabweichungen gegenüber dem theoretisch zu erwartenden Referenzsignal (z. B. 2.000 µm/m) überprüft und entsprechende Überschreitungen gemeldet werden.

Eine derartige selbsttätige Kalibrierung ist deshalb durch eine digitale Rechenschaltung 29 auch in regelmäßigen Zeitabständen gleichzeitig in allen Meßkanälen 15 möglich, ohne daß hierfür manuelle Arbeitskräfte notwendig sind. Eine derartige Kalibrierung kann durch die Rechenschaltung 29 auch protokolliert und gespeichert werden, so daß die jeweiligen Kalibrierwerte auch nachprüfbar erfaßt sind, so daß insbesondere bei sicherheitsrelevanten Messungen an geprüften Flugzeugteilen unmanipulierbare Meßwerte vorliegen, die von entsprechenden Überwachungsbehörden überprüfbar sind.

## Patentansprüche

1. Vorrichtung zum Kalibrieren von Dehnungsmeßschaltungen, wobei die Dehnungsmeßschaltungen aus mindestens einem Dehnungsaufnehmer in Form eines Dehnungsmeßstreifens bestehen, der als Viertelbrückenwiderstand geschaltet und über eine mindestens dreiadrige Meßleitung mit einem Meßkanal verbunden ist, der zur Erfassung und Verstärkung der Dehnungsmeßsignale dient und wobei an den Meßkanal eine Kalibrierschaltung anschaltbar ist, **dadurch gekennzeichnet, daß** der Meßkanal (15) eine Spannungsregelschaltung (17, 20) enthält, die mindestens die Spannungsabfälle auf der Meßleitung (16) ausregelt und daß die Kalibrierschaltung (26) im Meßkanal (15) integriert ist und mindestens aus einem zuschaltbaren Kalibrierwiderstand (R_{S}) parallel zu einem Ergänzungswiderstand (R_{E}) besteht, nach dessen Zuschaltung ein Kalibriersignal erzeugt wird, das als Meßsignal einer definierten Dehnungsänderung erfaßbar ist.

2. Vorrichtung nach Anspruch 1, **dadurch gekennzeichnet, daß** der Kalibrierwiderstand (R_{S}) als präziser Meßwiderstand ausgebildet ist, der über Schaltmittel (28) parallel zum Ergänzungswiderstand (R_{E}) der Ergänzungsviertelbrücke schaltbar ist.

3. Vorrichtung nach Anspruch 1 oder 2, **dadurch gekennzeichnet, daß** die Schaltmittel (28) als elektronische Schalter ausgebildet sind, die über eine elektronische Rechenschaltung (29) ansteuerbar sind.

4. Vorrichtung nach einem der vorhergehenden Ansprüche, **dadurch gekennzeichnet, daß** die elektronische Rechenschaltung (29) so ausgebildet ist, daß zur Kalibrierung die Schalter (28) aller vorhandenen Meßkanäle (15) gleichzeitig, nacheinander oder in vorgegebener Ablauffolge geschaltet und deren Kalibriersignale erfaßt werden.

5. Vorrichtung nach Anspruch 4, **dadurch gekennzeichnet, daß** durch die elektronische Rechenschaltung (29) die erfaßten Kalibriersignale mit vorgegebenen Referenzsignalen verglichen und deren Abweichung angezeigt und/oder gespeichert werden.

6. Vorrichtung nach Anspruch 5, **dadurch gekennzeichnet, daß** durch die elektronische Rechenschaltung (29) die erfaßten Abweichungen mit vorgegebenen Grenzwerten verglichen und bei einer festgestellten Überschreitung signalisiert und/oder ausgegeben werden.

7. Vorrichtung nach Anspruch 6, **dadurch gekennzeichnet, daß** durch die elektronische Rechenschaltung (29) die erfaßten Kalibrierwerte und deren Abweichungen vom Referenzwert meßkanalzugehörig identifiziert und nachvollziehbar protokolliert werden.

8. Verfahren zum Kalibrieren von Dehnungsmeßschaltungen mittels einer der Vorrichtungen nach den Ansprüchen 1 bis 7, **dadurch gekennzeichnet, daß** zum Kalibrieren der Meßschaltung zunächst das Dehnungsmeßsignal des Dehnungsmeßstreifens (SG) bei geöffneten Kalibrierschalter (28) erfaßt wird, und daß nachfolgend der Kalibrierschalter (28) geschlossen und die Differenz des Dehnungsmeßsignals als Kalibriersignal erfaßt und mit einem vorgegebenen Referenzwert verglichen und dessen Abweichung ermittelt wird.

9. Verfahren nach Anspruch 8, **dadurch gekennzeichnet, daß** die Differenzsignale aller vorhandenen Meßkanäle (15) erfaßt, identifiziert und protokolliert werden und mit vorgegebenen Grenzwerten verglichen und festgestellte Grenzwertüberschreitungen signalisiert und/oder gesondert ausgegeben werden.
